Europäisches Patentamt

(19) European Patent Office

Office européen des brevets

(11) Publication number: **0 134 988**
**B1**

(12) **EUROPEAN PATENT SPECIFICATION**

(45) Date of publication of patent specification: **28.12.88**

(21) Application number: **84108016.1**

(22) Date of filing: **09.07.84**

(51) Int. Cl.⁴: **B 23 B 31/20**

(54) **Collet for automatic lathes.**

(30) Priority: **22.07.83 IT 2218683**

(43) Date of publication of application:
**27.03.85 Bulletin 85/13**

(45) Publication of the grant of the patent:
**28.12.88 Bulletin 88/52**

(84) Designated Contracting States:
**AT BE CH DE FR GB LI LU NL SE**

(56) References cited:
**CH-A- 239 060**
**CH-A- 593 750**
**DD-U- 5 578**
**DE-A-1 477 772**
**DE-A-2 732 677**
**FR-A-1 371 605**
**FR-A-1 461 073**
**US-A-2 883 200**
**US-A-3 815 930**

(73) Proprietor: **Masiero, Davide**
**Via Zara 7**
**I-20052 Monza (IT)**

(72) Inventor: **Masiero, Davide**
**Via Zara No. 7**
**I-20052 Monza Milano (IT)**

(74) Representative: **Petruzzelli, Antonio**
**Via E. De Amicis No. 25**
**I-20123 Milano (IT)**

Courier Press, Leamington Spa, England.

## Description

This invention concerns a thrust collet for automatic lathes and other machine tools, including a mandrel having a collet for receiving a bar to be machined, the collet automatically gripping and releasing the bar at the beginning and end of each machining period.

There are know devices for gripping bars to be machined on automatic or turret lathes or in other machine tools which substantially comprise a thrust collet provided on the front end of a mandrel. The collet usually comprises a number of jaws rigidly and circumferentially arranged at the ends of rigid sections of a hollow supporting element designed to keep said gripping jaws centred with respect to an axially movable bell compression element; the bell has a conical internal surface against which the corresponding external conical surfaces of each single jaw slide to push the latter radially inwards, to the closed condition of the collet, in order to grip a bar. The collet is usually made to close by means of a push member which pushes axially against a cylindrical extension of the bell-shaped compression element, sliding within the mandrel.

The known types of collets present various drawbacks, due both to their particular mechanical structure and to the consequent method of clamping the bars, whilst the machine tool is in operation. In fact, in certain known types of collets, the various jaws are integral with the supporting element, for machining from a solid block of steel; consequently, in order to give the various parts of the jaw-supporting element a sufficient elasticity, the jaws cannot be provided with a high degree of hardness, as this would make the collet even more rigid and hard to clamp.

In an attempt to obviate the above mentioned drawback, several collets has been suggested (US—A—3815930, DD—U—5578, CH—A—239060 and DE—A—1477772) in which steel clamping jaws are formed separately and subsquently fastened to a supporting sleeve having longitudinal sleeve which extend rearwardly from an edge thereof, to define sleeve sectors to which the clamping jaws are attached.

In particular, US—A— 3815930 discloses a collet including steel clamping jaws which are embedded in a supporting sleeve made of elastic plastic material, disposed within a compression member comprising a forward compression portion and a tubular rear portion. The plastic sleeve has a slotted tubular portion and is provided with inwardly extending portions at its forward and rear ends defining guide bores for receiving a bar to be machined; furthermore, the external surface of said plastic sleeve is constantly in contact with the inner surface of the compression member. The contact between the facing surface of tubular portions of the compression member and jaw supporting sleeve, as well as said inwardly extending portions provided on the jaw supporting sleeve, prevent the sleeve sectors from bending in an S shaped manner. As a consequence, at the forward and rear ends of clamping jaws, radial forces of differing magnitudes will be exerted by the jaws against compression member. The exertion of differing forces may result in uneven wearing of both the jaws and compression member surfaces. In time, such wear results in a reduction of the clamping force and indeed malfunctioning of the collet.

An object of this invention is to provide a thrust-type collet for automatic lathes, or other machine tools, of the aforesaid type, so as to eliminate or substantially reduce the problems of the known collets, that is to say, so as to allow a high degree of hardness in the clamping elements of the collet, to prevent the possibility of considerable overheating and accumulation of dirt, and so as to ensure that the bars are always gripped by clamping surfaces which remain perfectly parallel to the axis of the mandrel, irrespective of the degree of wear to the collet itself.

A further object of this invention is to provide a collet as specified above, my means of which it is possible to exert the even clamping forces over a comparatively larger area of the bar to be machined and consequently using lower specific operative pressures of the collet.

According to the invention, a thrust collet for holding workpieces in the mandrel of a machine tool, and a mandrel comprising an automatic collet are provided according to independent claims 1 and 9.

An embodiment of the invention will be described in greater detail hereunder, with reference to the examples of the accompanying drawings, in which:

Fig. 1 shows a longitudinal cross-sectional view of a mandrel embodying a collet according to the embodiment;

Fig. 2 shows a transversal cross-sectional view along the line 2-2 of Fig. 1;

Fig. 3 shows an exploded cross-sectional view of the jaws and the supporting sleeve, along the line 3-3 of Fig. 2;

Fig. 4 shows a cross-sectional view of the jaws and the supporting sleeve, along the line 4-4 of Fig. 2;

Figs. 5 and 6 show further variations of the means for securing the jaws to the supporting sleeve;

Figs. 7 and 8 show two diagrams illustrating the different behaviour of the collet according to the embodiment and, respectively, of a conventional collet.

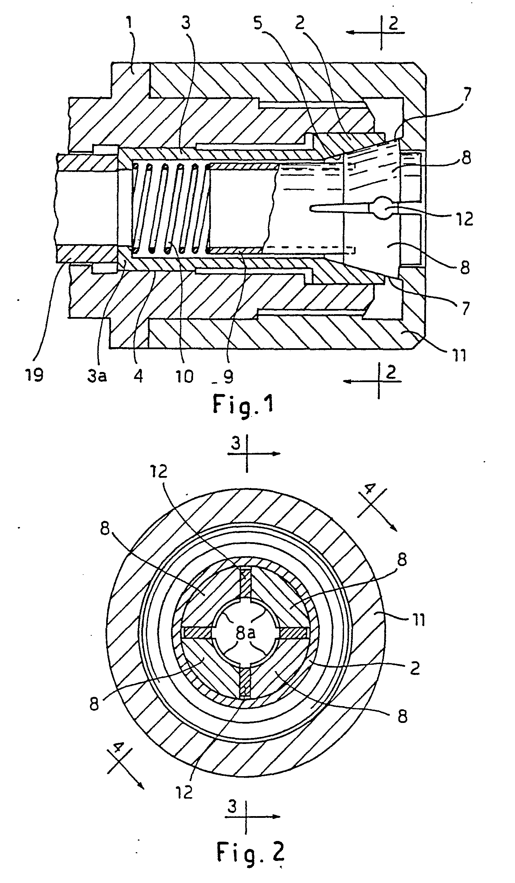

Figure 1 shows a mandrel 1 provided with an automatic collet. As shown, sliding inside, and axially to the mandrel 1 is a compression element having a forward bell-shaped portion 2 which extends towards the rear by means of a tubular element portion 3 which is suitably guided and kept centered in a bore 4 in the mandrel.

The forward portion of the compression element 2 has a conical internal surface 5 which acts radially upon corresponding external conical surfaces 7 provided on the outside of gripping

2

elements or jaws 8, arranged circumferentially and coaxially to the mandrel 1, through which is fed a bar to be clamped (not shown); the jaws 8 may present smooth, toothed or suitably shaped internal surfaces 8a which adapt from time to time to the shape and dimensions of the bars to be clamped.

The individual jaws are held on one end of a sleeve 9 housed, with a certain amount of clearance, within a tubular portion 3 of the bell 2 which is pushed by a push member 19. The sleeve 9 supporting the jaws 8, is shorter in length than the tubular element 3, so as to provide a biasing spring 10 inside the tubular extension 3, between one rear shoulder 3a and the rear end of the aforesaid sleeve 9; said spring is suitably calculated to constantly push the sleeve 9 and, consequently, the gripping elements 8 in an open condition, towards a front stop ring 11 screwed onto the end of the mandrel 1.

Spacers 12 in rubber or other suitable material (fig. 2) may be provided between the jaws 8, to keep the collet open to its exact nominal diamenter.

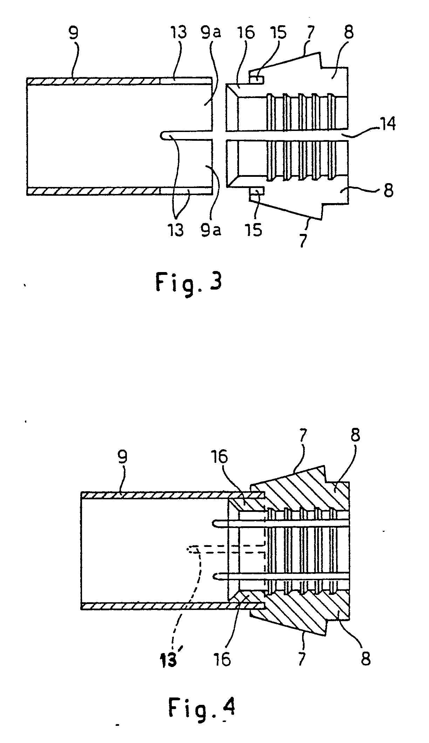

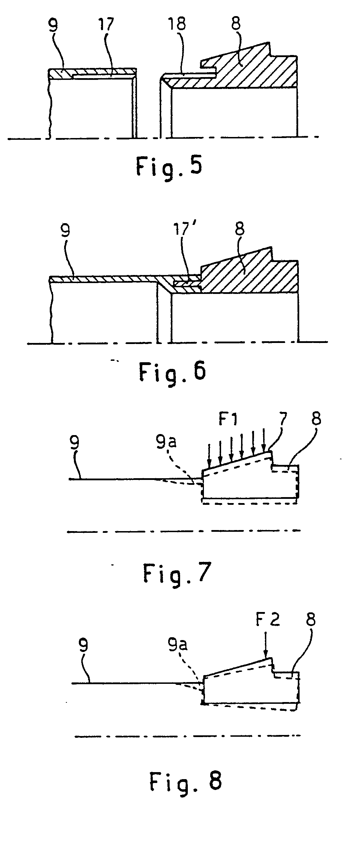

As shown in the cross-sections of figures 3 and 4, the sleeve 9 supporting the jaws 8 of the collet, is made separately and independently of the jaws themselves; consequently the jaws can be made from tempered steel, suitably treated in order to give them the desired degree of hardness. Therefore, the jaws of the collet do not have any influence whatsoever on the characteristics of the material used for the sleeve 9 which, moreover, unlike the known collets, has the sole functions of connecting and supporting the jaws themselves, as the correct centering of the latter, with respect to the longitudinal axis of the mandrel, is ensured by the correct contact between the conical surfaces 5 and 7 of the bell and, respectively, of the jaws themselves. The supporting sleeve 9 can therefore be housed, with a certain amount of clearance, in the tubular extension 3 of the bell and is made of elastically pliable material, capable that is, of bending under the radial thrust of the bell 2, without offering excessive resistance, so as to constantly maintain a perfect contact between the conical surfaces 5 and 7, and a coaxial or parallel closure of the jaws 8. Therefore, the expression "elastically pliable material" is understood as any suitable plastic or metallic material of relatively limited thickness and rigidity which, used appropriately, enables the jaws 8 to close smoothly and easily by bending elastically so as to keep the position of the jaws 8 constantly parallel to the axis of the mandrel; for example, satisfactory results have been obtained by using nylon 6 for the sleeve, although other plastic or metal materials can be used, such as steel sheet or plate or the like. The elements of the collet will be illustrated further on, with reference to figures 7 and 8.

In order to allow the radial closure of the single jaws 8, the sleeve 9 is provided with longitudinal slits or cavities 13 which extend over a preestablished distance starting from the end supporting the elements 8; said slits 13 are in correspondence with the dividing planes 14 between the jaws 8 and define sleeve sectors 9a of constant width which, like the slits 13, extend axially for a distance equal to or slightly longer than the external radius of the sleeve 9. It is obvious however, that the slits 13 can be of a different shape and length, with respect to that shown, depending upon the elastic or flexible properties of the material or materials used for the supporting sleeve 9, and also upon the thickness and dimensions of the sleeve itself.

As mentioned previously, the jaws 8 of the collet and the supporting sleeve 9 are made in separate parts and from different materials; means must therefore be provided for connecting each jaw to a respective sector 9a of the sleeve 9. Said connecting means may be made in any desired way, as they serve merely to provide a mechanical connection between the jaws 8 and the supporting sleeve 9 since the centering of the elements 8, as mentioned previously, is ensured at all times by the combined action of the conical surfaces 5 and 7 and since the correct aperture of the collet is ensured by the centrifugal force caused by the rapid rotation of the mandrel. In the case shown in figures 1 to 4, the connection between the sleeve 9 and the gripping elements 8 is achieved by forcing the sectors 9a of the sleeve 9 into arch-shaped grooves 15 provided on the outside of a centering portion 16.

Although it is possible to use any mechanical system for securing the elements 8 and 9, for example screws rivets and the like, figures 5 and 6 show two further alternative systems; in particular, the example in fig. 5 shows the use of suitable threading 17 and 18, whereas in the example in fig. 6, the single jaws are secured by moulding the sleeve 9 directly onto the jaws themselves and by providing the latter with suitable protruding portions 17 penetrate into the moulded plastic material.

Lastly, figure 4 of the accompanying drawings shows a further variation according to which the sleeve 9, in addition to the main slits 13 in correspondence with the dividing planes 14 between the gripping jaws 8, may also be provided with intermediate slits 13' of identical or different lengths from that of the slits 13, in order to increase the flexibility of the sleeve sectors 9a, in cases in which it is required.

Figures 7 and 8 show the different behaviour of a collect according to the invention, as compared to a conventional collet. A schematic representation is given in both figures, of a sinlge gripping jaw 8 and the conformation that the sleeve 9 assumes in the open condition of the collet (continuous line) and, respectively, in the closed condition (dotted lines), exaggerating the movements in order to illustrate the different behaviour more clearly.

In the conventional case in figure 8, the sectors 9a act as real cantilever leaf springs loaded at one end; the sectors 9a consequently bend, arching up towards the axis of the mandrel, thereby causing contact between the conical surfaces 5 and 7 only in the front part, where a concentrated gripping action is exerted, given by force F2. The situation has been purposely exaggerated in the diagram in figure 8 to illustrate the phenomenon more clearly. As mentioned previously, this gives rise to considerable localized wearing of the collet, with all the negative consequences described earlier on. This can also be attributed to the extreme rigidity of conventional one-piece collets, as the technician always started from the assumption that the elasticity of the sleeve itself, or rather, of its sleeve sectors 9a, should serve to open the collet.

Whereas, this invention, as mentioned previously and as shown in fig. 7, started from a totally different principle, in other words, the invention starts from the assumption of making the sleeve 9 completely separate, elastically flexible and from different material to that of the elements 8, providing an anular clearance for the entire length of the sleeve 9 it was thus possible to use an elastically pliable material for the sleeve 9, that is to say, less rigid than that of the conventional collets, so that the various sleeve sectors 9a, in freely bending, always allow the various gripping jaws 8 to close parallel to the axis of the mandrel. This ensures a correct contact between the conical surfaces 5 and 7 and an even distribution of the clamping forces F1 all over the aforesaid conical surfaces. Consequently, with equal clamping forces, the collet according to the invention operates with considerably lower specific pressures and at the same time ensures correct clamping of the bars over the entire surface of the collet.

## Claims

1. A collet for holding workpieces in the mandrel of a machine tool, comprising clamping jaws (8) circumferentially arranged at one end of the collet; an elastic sleeve (9) made of a pliable material, said sleeve (9) having longitudinal slits (13) which extend rearwardly from an edge thereof to define sleeve sectors (9a), said clamping jaws (8) being attached to said sleeve sectors (9a) and having external conical surfacs (7), and an axially movable compression member comprising a forward portion (2) and a tubular rear portion (3), the forward portion (2) having a conical internal surface (5) which is operable to engage the conical surfaces (7) of the clamping jaws (8) during axial movement of the compression member, characterized in that said sleeve (9) is in the form of a cylindrical tube element disposed within and radially spaced from the tubular rear portion (3) of the compression member, to provide a clearance allowing said sleeve sectors (9a) to bend in the form of an S under the action of the compression member (2, 3) so as to provide an even distribution of clamping forces over the entire conical surfaces of the jaws (8).

2. Collet as claimed in claim 1, characterized by the fact that the jaw supporting sleeve (9) is made of plastic material.

3. Collet as claimed in claim 1, characterized by the fact that the jaw supporting sleeve (9) is made of metal sheet or plate.

4. Collet as claimed in claim 1, characterized by the fact that the longitudinal slits comprise main slits (13) in correspondence with .the dividing planes between the clamping jaws (8); and secondary slits (13') between the main slits (13).

5. Collet as claimed in claims 4, characterized by the fact that the main and secondary slits (13, 13') are of different lengths.

6. Collet as claimed in claim 1, characterized by the fact that each jaw (8) includes an arch-shaped groove (15), each of said sleeve sectors (9a) being forcibly received within a corresponding groove (15) of a clamping jaw.

7. Collet as claimed in claim 1, characterized by the fact that the supporting sleeve (9) and the clamping jaws (8) are provided with threaded connection portions (17, 18).

8. Collect as claimed in claim 1, characterized by the fact that the sleeve (9) is made of plastic material moulded directly onto the clamping jaws (8), the latter being provided with protrusions (17') which penetrate into the moulded plastic material.

9. A mandrel in combination with an automatic collet of the thrust type for holding work-pieces, said collet comprising: clamping jaws (8) circumferentially arranged on at least one end of the collet; an elastic sleeve (9) made of a pliable material, said sleeve (9) having longitudinal slits (13) which extend rearwardly from an edge thereof to define sleeve sectors (9a), said clamping jaws (8) being attached to said sleeve sectors (9a) and having external concical surfaces (7); a stop ring (11) at the end of the mandrel (1) and an axially movable compression member comprising a forward portion (2) and a tubular rear portion (3) said forward portion (2) having a conical internal surface (5) to engage the conical surfaces (7) of the clamping jaws (8) during axial movement of the compression member; a biasing spring (10) disposed between said sleeve and said compression member, characterized in that said sleeve (9) is in the form of a cylindrical tube element having substantially constant thickness of the wall, said sleeve being disposed within and radially spaced from the tubular rear portion (3) of the compression member to provide an annular clearance for the entire length of the sleeve (9) allowing said sleeve sectors (9a), to freely bend while maintaining the clamping jaws (8) parallel to the longitudinal axis of the mandrel.

## Patentansprüche

1. Spannpatrone zum Halten von Werkstücken in der Spindel einer Werkzeugmaschine, enthaltend umlaufend an dem einen Ende der Spannpatrone angeordnete Klemmbacken (8); eine elastische Manschette (9), hergestellt aus einem nachgiebigen Material, wobei die genannte Manschette (9) Längsschlitze (13) aufweist, die sich rückwärts von einer Kante derselben aus erstrecken und Manschettenabschnitte (9a) bilden, und wobei die genannten Klemmbakken (8) an den genannten Manschettenabschnitten (9a) befestigt sind und äussere konische Oberflächen (7) haben, sowie ein axial bewegliches Druckelement mit einem vorderen Abschnitt (2) und einem rückwärtigen, rohrförmigen Abschnitt (3), wobei der vordere Abschnitt (2) eine interne konische Oberfläche (5) aufweist, die sich im Betrieb während der axialen Bewegung des Druckelementes mit den konischen Oberflächen (7) der Klemmbacken (8) verbindet, dadurch gekennzeichnet, dass die genannte Manschette (9), in der Form eines zylindrischen Rohrelementes in den rückwärtigen rohrförmigen Abschnitt (3) des Druckelementes eingesetzt ist und radial von diesem einen Abstand hat, um einen Spalt zu bilden, der es den genannten Manschettenabschnitten (9a) erlaubt, sich unter der Wirkung des Druckelementes (2, 3) in der Form eines S zu biegen, so dass eine gleiche Verteilung der Klemmkräfte über die gesamte konische Oberfläche der Klemmbacken (8) möglich ist.

2. Spannpatrone nach Patentanspruch 1, dadurch gekennzeichnet, dass die die Klemmbacke haltende Manschette (9) aus Kunststoffmaterial hergestellt ist.

3. Spannpatrone nach Patentanspruch 1, dadurch gekennzeichnet, dass die die Klemmbacke haltende Manschette (9) aus Blech oder einer Metallplatte hergestellt ist.

4. Spannpatrone nach Patentanspruch 1, dadurch gekennzeichnet, dass die Längsschlitze aus Hauptschlitzen (13) entsprechend an den Trennebenen zwischen den klemmbacken (8) und aus zweiten Schlitzen (13') bestehen, die zwischen den Hauptschlitzen (13) liegen.

5. Spannpatrone nach Patentanspruch 4, dadurch gekennzeichnet, dass der Hauptschlitz (13) und der zweite Schlitz (13') von unterschiedlicher Länge sind.

6. Spannpatrone nach Patentanspruch 1, dadurch gekennzeichnet, dass jede Klemmbacke (8) eine bogenförmig ausgebildete Rille (14) aufweist, wobei jeder der genannten Manschettenabschnitte (9a) zangenartig in einer entsprechenden Rille (15) der Klemmbacke (8) aufgenommen wird.

7. Spannpatrone nach Patentanspruch 1, dadurch gekennzeichnet, dass die tragende Manschette (9) und die Klemmbacken (8) mit Verbindungsabschnitten (17, 18) versehen sind, die über ein Gewinde verfügen.

8. Spannpatrone nach Patentanspruch 1, dadurch gekennzeichnet, dass die Manschette (9) aus Kunststoffmaterial hergestellt ist, das direkt an die Klemmbacken (8) angeformt wird, wobei letztere mit Vorsprüngen (17') versehen sind, die in das angeformte Kunststoffmaterial eindringen.

9. Spindel in Verbindung mit einer automatischen Spannpatrone der vorliegenden Art zum Halten von Werkstücken, wobei die genannte Spannpatrone wie folgt enthält: Umlaufend an wenigstens einem Ende der Spannpatrone angeordnete Klemmbacken (8); eine elastische Manschette (9), hergestellt aus nachgiebigem Material, wobei die genannte Manschette (9) Längsschlitze (13) aufweist, die sich rückwärts von einer Kante derselben aus erstrecken und Manschettenabschnitte (9a) bilden, und wobei die genannten Klemmbacken (8) an den genannten Manschettenabschnitten (9a) befestigt sind und äussere konische Oberflächen (7) haben; einen Blockierring (11) am Ende der Spindel (1) und ein axial bewegliches Druckelement enthaltend einen vorderen Abschnitt (2) und einen rückwärtigen, rohrförmigen Abschnitt (3), wobei der genannte vordere Abschnitt (2) eine konische interne Oberfläche (5) aufweist, um sich während der axialen Bewegung des Druckelementes mit den konischen Oberflächen (7) der Klemmbacken (8) zu verbinden; eine Druckfeder (10), die zwischen der genannten Manschette und dem genannten Druckelement angeordnet ist, dadurch gekennzeichnet, dass die genannte Manschette (9) in Form eines zylindrischen Rohrelementes ausgebildet ist und grundsätzlich eine gleichbleibende Wandstärke hat, wobei die genannte Manschette in den rückwärtigen, rohrförimigen Abschnitt (3) des Druckelementes eingesetzt ist und radial von diesem einen Abstand hat, um einen ringförmigen Spalt über die gesamte Länge der Manschette (9) zu bilden, der es den genannten Manschettenabschnitten (9a) erlaubt, sich frei zu biegen, wobei die Klemmbakken (8) parallel zu der Längsachse der Spindel gehalten werden.

**Revendications**

1. Collet de serrage de pièces à usiner dans le mandrin d'une machine-outil, comprenant des mâchoires de serrage (8) disposées circonférentiellement sur une extrémité du collet: un manchon élastique (9) réalisé à partir d'une matière souple, le manchon (9) comportant des fentes longitudinales (13) qui s'étendent vers l'arrière depuis un bord de celles-ci pour définir des secteurs de manchon (9a), les mâchoires de serrage (8) étant fixées sur les secteurs de manchon (9a) et comportant des surfaces coniques externes (7), et un élément de compression mobile axialement comprenant une portion avant (2) et une portion arrière tubulaire (3), la portion avant (2) comportant une surface conique interne (5) qui est actionnable pour s'engager dans les surfaces coniques (7) des mâhories de serrage (8) pendant le mouvement axial de l'élément de compression, caractérisé en ce que le manchon (9) présente la forms d'un élément de tube cylindrique disposé à l'intérieur de et radialement espacé par rapport à la portion arrière tubulaire (3) de l'élément de compression, pour fournir une zone de dégagement permettant aux secteurs de manchone (9a) de se plier en forme de S sous l'action de l'élément de compression (2, 3) de façon à fourner une répartition uniforme des forces de serrage sur la totalité des surfaces coniques des mâchoires (8).

2. Collet selon la revendication 1, caractérisé par le fait que le manchon de support de mâchoires (9) est réalisé en matière plastique.

3. Collet selon la revendication 1, caractérisé par le fait que le manchon (9) de support de mâchoires est réalisé en feuille ou tôle métallique.

4. Collet selon la revendication 1, caractérisé par le fait que les fentes longitudinales comprennent des fentes principales (13) en correspondance avec les plans de division entre les mâchoires de serrage (8); et des fentes secondaires (13') entre les fentes principales (13).

5. Collet selon la revendication 4, caractérisé par le fait que les fentes principales et secondaires (13, 13') sont de différentes longueurs.

6. Collet selon la revendication 1, caractérisé par le fait que chaque mâchoire (8) comprend une rainure arquée (15), chacun des secteurs de manchon (9a) étant logé par force dans une rainure correspondante (15) d'une mâchoire de serrage.

7. Collet selon la revendication 1, caractérisé par le fait que le machon de support (9) et les mâchoires de serrage (8) sont munis de portions de liaison filetées (17, 18).

8. Collet selon la revendication 1, caractérisé par le fait que le manchon (9) est réalisé en matière plastique moulée directement sur les mâchoires de serrage (8), ces dernières étant munies de saillies (17') qui pénètrent dans la matière plastique moulée.

9. Mandrin en combinaison avec un collet automatique du type à poussée pour maintenir des pièces à usiner, le collet comprenant: des mâchoires de serrage (8) disposées circonférentiellement sur au moins une extrémité du collet, un manchon élastique (9) réalisé en une matière souple, le manchon (9) présentant des fentes longitudinales (13) qui s'étendent vers l'arrière à partir d'un bord de celles-ci pour définir des secteurs de manchon (9a), les mâchoires de serrage (8) étant fixées sur les secteurs de manchon (9a) et comportant des surfaces coniques externes (7); un anneau de butée (11) sur l'extrémité du mandrin (1) et un élément de compression mobile axialement comprenant une portion avant (2) et une portion arrière tubulaire (3), la portion avant (2) comportant une surface interne conique (5) pour s'engager dans les surfaces coniques (7) des mâchoires de serrage (8) pendant le mouvement axial de l'élément de compression; un ressort de sollicitation (10) agencé entre le manchon et l'élément de compression, caractérisé en ce que le manchon (9) présente la forme d'un élément de tube cylindrique comportant une paroi d'épaisseur sensiblement constante, le manchon étant disposé à l'intérieur de et radialement espacé par rapport à la portion arrière tubulaire (3) de l'élément de compression pour fournir une zone de dégagement annulaire pour toute la longeur du manchon (9) permettant aux secteurs de manchon (9a) de sel plier librement tout en maintenant les mâchoires de serrage (8) parrallèles à l'axe longitudinal du mandrin.

EP  0 134 988  B1

Fig.1

Fig. 2

1

Fig. 3

Fig. 4

Fig. 5

Fig. 6

Fig. 7

Fig. 8